# EUROPÄISCHE PATENTSCHRIFT

(11) **EP 1 220 065 B1**
(45) Veröffentlichungstag und Bekanntmachung des Hinweises auf die Patenterteilung: **30.07.2003**
(21) Anmeldenummer: 01129878.3
(22) Anmeldetag: 14.12.2001
(51) Int. Cl.: G05B 19/04, G05B 19/18

(54) **Verfahren zum Betrieb einer industriellen Steuerung mit Run-Time-System**
Method for operating an industrial controller with a run-time system
Procédé pour faire fonctionner un contrôleur industriel avec un système run-time

(30) Priorität: 27.12.2000 DE 10065416; 26.03.2001 DE 10114871
(43) Veröffentlichungstag der Anmeldung: 03.07.2002
(73) Patentinhaber: SIEMENS AKTIENGESELLSCHAFT, 80333 München (DE)
(72) Erfinder: Amrhein, Armin, 92245 Kümmersbruck (DE); Birzer, Johannes, 92551 Stulln (DE); Hennefelder, Thomas, 91484 Sugenheim (DE); Kiesel, Martin, 91099 Poxdorf (DE); Kram, Raimund, 91056 Erlangen (DE); Schmitt, Regina, 91056 Erlangen (DE)

(56) Entgegenhaltungen:
- EP-A- 0 735 445
- US-A- 5 193 189

## Beschreibung

Die Erfindung bezieht sich auf ein Verfahren zum Betrieb einer industriellen Steuerung, insbesondere für Produktionsmaschinen.

Ferner bezieht sich die Erfindung auf eine industrielle Steuerung zur Durchführung des erfindungsgemäßen Verfahrens.

Es ist heutzutage üblich, sowohl für die speicherprogrammierbare Steuerung (SPS) als auch für die Bewegungssteuerung (MC) jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Aus DE 197 40 550 A1 ist es bekannt, dass Prozesssteuerungsfunktionalitäten der speicherprogrammierbaren Steuerungen "SPS" und. Bewegungsfunktionalitäten von MC-Steuerungen in einem einheitlichen konfigurierbaren Steuerungssystem integriert werden können.

Diese SPS/MC-Integration geschieht in Form des Zusammenschaltens von SPS- und MC-Steuerungsbaugruppen. Bei einer solchen Ausführung der Integration wird aber keine optimale und effiziente Taskstruktur für die Gesamtheit der Steuerungsaufgaben erreicht. Außerdem werden bei dieser Art der Integration hauptsächlich die klassischen MC-Funktionalitäten, wie sie insbesondere für Werkzeugmaschinen relevant sind, unterstützt. Anforderungen an die Steuerung, wie sie aus dem Betrieb von Produktionsmaschinen bekannt sind, werden durch diese Art des Zusammenschaltens von SPS- und MC-Steuerungsbaugruppen nicht optimal unterstützt.

Aus EP 0 735 445 A2 ist es bekannt, zum Betrieb einer Werkzeugmaschine oder eines Roboters einen gesonderten Wartebefehl (WAIT) zu gebrauchen. Der hier beschriebene Wartebefehl (WAIT) unterstützt aber insbesondere die Steuerung von Produktionsmaschinen noch nicht optimal.

In der Anmeldung DE 19 93 19 33.2 wird vorgeschlagen, den Takt des Kommunikationssystems zwischen dem PC-System und den peripheren Geräten für einen Wechsel zwischen einem Echtzeitbetriebsprogramm und einem Nicht-Echtzeitbetriebsprogramm heranzunehmen. Hier ist es aber die Aufgabe dieser Taktabgreifung aus dem Kommunikationssystem, in einem industriellen Prozess einen möglichst reibungslosen Wechsel zwischen Echtzeit- und Nicht-Echtzeitanwendungen stattfinden zu lassen. Bei dieser Ausgestaltung wird der Grundtakt aber nur aus dem Takt des Kommunikationsmediums abgeleitet und er wird nur für den Wechsel des Betriebssystemmodus eines PC-Systems verwendet.

Der Erfindung liegt daher die Aufgabe zugrunde, für jeweils unterschiedliche Steuerungsaufgaben und unterschiedliche Randbedingungen bzw. Anforderungen des zugrunde liegenden technischen Prozesses in einfacher Weise optimale Ausprägungen einer industriellen Steuerung zu erstellen, die sowohl SPS- als auch MC-Funktionalität zur Verfügung stellt und somit auch für die Steuerung von Produktionsmaschinen geeignet ist.

Diese optimalen Ausprägungen werden prinzipiell zum einen durch ein einheitliches konfigurierbares Ablaufebenenmodell für die Steuerungs-Tasks der industriellen Steuerung erreicht und zum anderen durch Mechanismen (Wait_for_Condition-Befehl), die es einem Anwender ermöglichen, im Programmfluss auf beliebige Bedingungen zu warten und höherprior zu reagieren.

Von diesem Ansatz ausgehend wird die oben genannte Aufgabe dadurch gelöst, dass Mechanismen bereitgestellt sind, die es einem Anwender ermöglichen im Programmfluß auf eine beliebige Bedingung zu warten, wobei bei Erfülltsein der Bedingung der Programmfluß unmittelbar fortgesetzt wird, bei Nichterfülltsein der Bedingung der Programmfluß solange angehalten wird, bis das Erfülltsein der Bedingung festgestellt wird, wobei beim Warten auf das Erfülltsein der Bedingung die Priorität der Bedingungsüberprüfung im Vergleich zur aktuellen Taskpriorität erhöht wird. Durch diesen Mechanismus wird es ermöglicht, eine zusammengehörige und geschlossene Aufgabenstellung in einem Stück Code eines Anwenderprogrammes auszudrücken, ohne dass weitere Mechanismen wie z.B. Event-Handler erforderlich sind. Ein Anwender kann somit in einem sequentiellen Programmablauf auf einer relativ niedrigen Prioritätsebene einer "Motion Task" durch Programmkonstrukte in seinem Programmfluß (Anwenderprogramm) das Warten auf hochpriore Ereignisse formulieren, ohne in ein anderes Programm wechseln zu müssen. Dadurch wird einerseits in der Steuerung Verwaltungs-Overhead vermieden, was direkt die System-Performance erhöht und andererseits aus programmiertechnischer Sicht das Lokalitätsprinzip unterstützt, wodurch z.B. das Debugging erleichtert wird.

Der beschriebene Mechanismus und der dazugehörige Befehl werden im weiteren als "wait_for_condition" bezeichnet.

Eine erste vorteilhafte Ausgestaltung der vorliegenden Erfindung liegt darin, dass nach dem Erfülltsein der Bedingung die folgende Programmsequenz bis zu einem expliziten Ende hochprior bearbeitet wird, wobei nach dem expliziten Ende der Programmsequenz die alte Taskpriorität wieder aufgenommen wird. Dadurch wird eine hohe Deterministik in der Sequenz "Warten auf externes Ereignis" und der "Aktion, die nach diesem Ereignis folgt", z.B. Korrekturbewegungen bei einer Druckmarkensynchronisation, erreicht. Ein Anwender hat somit die Möglichkeit sich in seinen Programmen temporär auf eine hohe Prioritätsebene zu legen und dabei deterministische Vorgänge leicht und elegant beschreiben zu können. Anwendungsbeispiele sind z.B. Druckmarkensynchronisation und schnelle Bewegungsstart (beispielsweise nach Flankenwechsel).

Eine weitere vorteilhafte Ausgestaltung der Erfindung liegt darin, dass für die Formulierung der Bedingungen Prozeßsignale und/oder interne Signale der Steuerung und/oder Variablen aus Anwenderprogrammen verwendet werden. Dadurch ist es dem Anwender möglich, bei der Beschreibung der Bedingungen in einer einheitlichen Weise neben Anwenderprogrammvariablen auch direkt Systemzustände und Prozeßsignale zu verwenden.

Eine weitere vorteilhafte Ausgestaltung der Erfindung liegt darin, dass die Bedingungen logische und/oder arithmetische und/oder beliebige funktionelle Verknüpfungen enthalten. Damit ist es dem Anwender möglich, innerhalb einer Anweisung komplexe Synchronisationsbeziehungen zu spezifizieren.

Eine weitere vorteilhafte Ausgestaltung der Erfindung liegt darin, dass ein Anwenderprogramm für den Betrieb der Steuerung mehr als einen solchen Mechanismus enthält. Dadurch werden bei der Programmierung der Anwendungen die Flexibilität und die Möglichkeiten des Anwenders insbesondere hinsichtlich der Beschreibung von Synchronisationsaktivitäten erhöht.

Eine weitere vorteilhafte Ausgestaltung der Erfindung liegt darin, dass es mehrere Anwenderprogramme beim Betrieb der Steuerung geben kann, die diese Mechanismen enthalten. Dadurch werden bei der Programmierung der Anwendungen die Flexibilität und die Möglichkeiten des Anwenders insbesondere hinsichtlich der Beschreibung von Synchronisationsaktivitäten erhöht.

Eine weitere vorteilhafte Ausgestaltung der Erfindung liegt darin, dass der jeweilige Mechanismus einem Anwender in einem Anwenderprogramm als übliches programmiersprachliches Konstrukt zur Verfügung steht. Der "wait_for_condition-Befehl", der diesen Mechanismus auslöst, kann somit von einem Anwender in den Anwenderprogrammen z.B. wie eine while-Schleife verwendet werden, wodurch die Programmerstellung sehr erleichtert wird.

Eine weitere vorteilhafte Ausgestaltung der Erfindung liegt darin, dass das Runtime-System der Steuerung ein Ablaufebenenmodell enthält, das mehrere Ablaufebenen unterschiedlichen Typs mit unterschiedlicher Priorität aufweist, wobei folgende Ablaufebenen vorgesehen sind:
a) eine Ebenengruppe mit synchron getakteten Ebenen, bestehend aus mindestens einer Systemebene und mindestens einer Anwenderebene, wobei die Ebenen dieser Ebenengruppe untereinander eine Priorisierung aufweisen können,
b) einer Anwenderebene für Systemexceptions
c) einer zeitgesteuerten Anwenderebene
d) einer ereignisgesteuerten Anwenderebene
e) einer sequentiellen Anwenderebene
f) einer zyklischen Anwenderebene,
wobei Anwenderebenen der Ebenengruppe a) optional synchron zu einer der Systemebenen der Ebenengruppe a) laufen können. Ein wesentlicher Vorteil dieser Schichtung liegt darin, dass die Kommunikation zwischen den Tasks der Prozesssteuerung (SPS) und denen der Bewegungssteuerung (MC) minimiert wird. Ein weiterer Vorteil liegt darin, dass die Programmierung der Steuerungsaufgaben für die Prozesssteuerung und für die Bewegungssteuerung in einer einheitlichen Programmiersprache mit einer einheitlichen Erstelloberfläche erfolgen kann und dass der Anwender ein für seine jeweiligen Anforderungen zugeschnittenes Ablaufebenenmodell flexibel erstellen kann.

Eine weitere vorteilhafte Ausgestaltung der Erfindung liegt darin, dass der Grundtakt des Ablaufebenenmodells aus einem internen Timer oder aus einem internen Takt eines Kommunikationsmediums oder aus einem externen Gerät oder von einer Größe, die zum technologischen Prozeß gehört abgeleitet wird. Dadurch kann sehr flexibel und sehr einfach der Grundtakt für das Ablaufebenenmodell abgeleitet werden. Dadurch, dass der Grundtakt für das Ablaufebenenmodell auch von einer Größe, die zum technologischen Prozess gehört, ableitbar ist, kann auf eine sehr einfache Weise eine direkte Rückkopplung aus dem technologischen Prozess zur Steuerung erhalten werden.

Eine weitere vorteilhafte Ausgestaltung der Erfindung liegt darin, dass die zeitgesteuerte Anwenderebene, die ereignisgesteuerte Anwenderebene, die sequentielle Ablaufebene, die zyklische Hintergrundebene und die Anwenderebene für Systemexceptions optional sind. Der Anwender kann sich dadurch sehr flexibel eine Steuerung erstellen, die für seine konkreten vorliegenden Anforderungen sehr effizient ist und die die gerade benötigten Ablaufebenen enthält und somit keinen unnötigen Overhead beinhaltet.

Eine weitere vorteilhafte Ausgestaltung der Erfindung liegt darin, dass die synchronen Ebenen zum Grundtakt übersetzt und/oder untersetzt und/oder im Verhältnis 1:1 getaktet sind. Dadurch können die Ebenen jeweils sehr leicht zu einem Vielfachen des Grundtaktes getaktet werden oder aber auch jeweils zu einem reziproken Vielfachen getaktet werden. Ausgehend von einer gemeinsamen Ausgangsgröße können somit sehr einfach Übersetzungen, aber auch Untersetzungen für die jeweiligen Ebenen erreicht werden.

Eine weitere vorteilhafte Ausgestaltung der Erfindung liegt darin, dass weitere priorisierende Schichtungen innerhalb der Ablaufebenen vorgesehen sind. Die Softwarestruktur der industriellen Steuerung lässt sich dadurch optimal an die unterschiedlichen Steuerungsaufgaben bzw. an die Anforderungen des zugrunde liegenden technischen Prozesses anpassen. Somit lassen sich z.B. unterschiedliche Fehlerursachen unterschiedlichen Ebenen mit z.B. aufsteigender Priorität zuordnen.

Eine weitere vorteilhafte Ausgestaltung der Erfindung liegt darin, dass optional Anwendertasks beim Systemhochlauf und/oder beim Systemrunterfahren durchlaufbar sind. Dadurch können beim Systemhochlauf z.B. Initialisierungsfunktionen angestoßen werden oder beim Systemrunterfahren wird sichergestellt, dass die im System vorhandenen Achsen eine definierte Position einnehmen.

Eine weitere vorteilhafte Ausgestaltung der Erfindung liegt darin, dass in die Anwenderebenen Anwenderprogramme ladbar sind, die je nach Typ der Anwenderebene zyklusorientiert oder sequentiell programmiert sind. Dadurch kann der Anwender in seinen Anwenderprogrammen die Funktionalität der Steuerung sehr flexibel an die zugrunde liegenden Anforderungen des technischen Prozesses anpassen und er kann auch die Anwenderprogramme in unterschiedliche Anwenderebenen laden, um dadurch eine für seine jeweiligen Applikationen effektive Ausprägung der Steuerung zu erreichen. Ein weiterer Vorteil liegt darin, dass der Anwender in ein einheitliches Ablaufebenenmodell bzw. Runtime-System einer industriellen Steuerung sowohl zyklusorientierte Anwenderprogramme als auch ereignisorientierte Anwenderprogramme laden kann. Ein Anwender kann somit nach unterschiedlichen Paradigmen programmierte Programme (zyklusorientiert für SPS-Funktionalität und ereignisorientiert bzw. sequentiell für Bewegungsfunktionalität) sehr flexibel und konform in die Anwenderebenen des Ablaufebenenmodells hinzuladen.

Ein Ausführungsbeispiel der Erfindung ist in der Zeichnung dargestellt und wird im folgenden erläutert.

Dabei zeigen:
- FIG 1: die wesentlichen Ablaufebenen einer klassischen speicherprogrammierbaren Steuerung,
- FIG 2: die wesentlichen Ablaufebenen einer Bewegungssteuerung,
- FIG 3: schematische Darstellung einer industriellen Steuerung,
- FIG 4: das Ablaufebenenmodell der erfindungsgemäßen industriellen Steuerung,
- FIG 5: ein Ausführungsbeispiel für das Zuladen von Anwenderprogrammen in die Anwenderebenen,
- FIG 6: ein Ausführungsbeispiel für den Gebrauch und den Mechanismus des Wait_for_Condition-Befehls, im Ablaufebenenmodell der erfindungsgemäßen industriellen Steuerung,
- FIG 7: ein weiteres Ausführungsbeispiel für den Gebrauch und den Mechanismus des Wait_for_Condition-Befehls, im Ablaufebenenmodell der erfindungsgemäßen industriellen Steuerung,
- FIG 8: die syntaktische Beschreibung des Wait_for_Condition-Befehls in einem Syntaxdiagramm,
- FIG 9: ein Beispiel für die Formulierung einer Expression in programmiersprachlicher Notation und
- FIG 10: in einer Schemadarstellung Möglichkeiten, wie der Grundtakt für die industrielle Steuerung gewonnen wird.

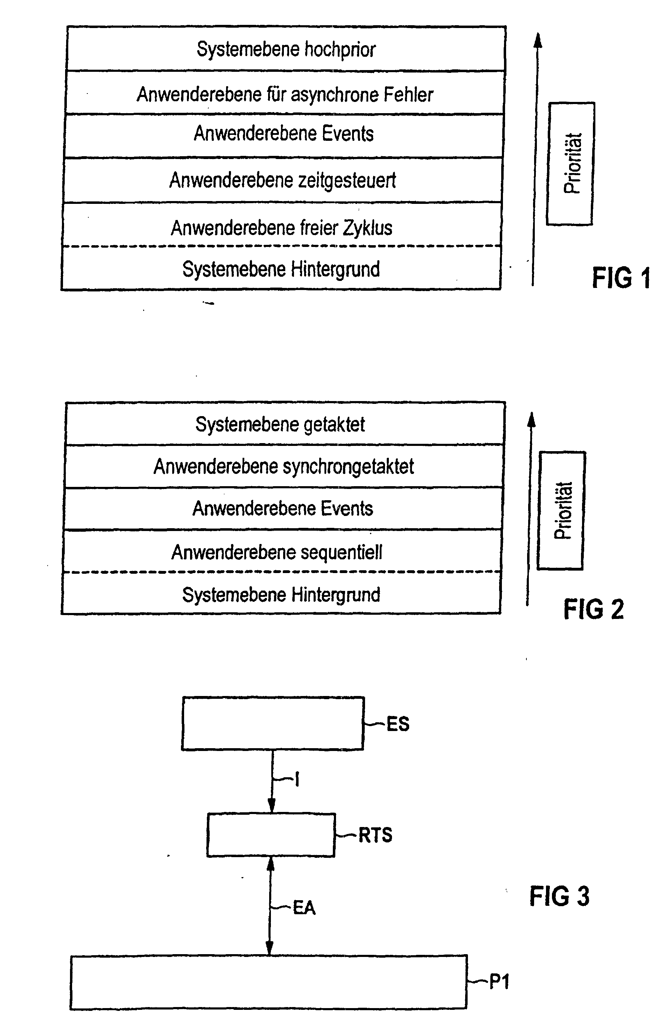

In der Darstellung gemäß FIG 1 sind die wesentlichen Ablaufebenen einer klassischen speicherprogrammierbaren Steuerung (SPS), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund" abgewickelt. Der Hintergrund-Systemebene sind z.B. Kommunikationsaufgaben zugeordnet. Bei einer folgenden Anwenderebene, bezeichnet als "Anwenderebene zeitgesteuert", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne dass das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.
Auf die "Anwenderebene zeitgesteuert" folgt eine "Anwenderebene Events". Die Reaktion auf externe oder interne Ereignisse (Events) erfolgt innerhalb der "Anwenderebene Events". Ein typisches Beispiel für ein solches Ereignis ist das Schalten eines binären bzw. digitalen Eingangs, wodurch typischerweise ein Ereignis ausgelöst wird. In einer "Systemebene hochprior" liegen die Aufgaben des Betriebssystems, welche die Arbeitsweise der programmierbaren Steuerung (SPS) sicherstellen.

Die Darstellung gemäß FIG 2 zeigt die wesentlichen Ablaufebenen einer Bewegungssteuerung (MC). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequentiell" haben eine gleiche Priorität, nämlich die niedrigste. Diese aufgabenmäßige Zugehörigkeit ist wie bei FIG 1 durch eine gestrichelte Linie symbolisiert. Die Tasks der "Anwenderebene sequentiell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequentiell" laufen die vom Anwender programmierten Programmteile für die eigentliche Steuerungsaufgabe. Stößt die Steuerung in einem dieser Programmteile auf einen Bewegungs- oder Positionierbefehl, wird ein "Suspend" gesetzt, d.h. das Anwenderprogramm wird an dieser Stelle unterbrochen. In diesem Fall wird ein Befehl synchron genutzt. Die Abarbeitung dieses Bewegungs- oder Positionierbefehls geschieht in einer höchstprioren "Systemebene getaktet". Ein jeder Lageregler oder Interpolator, der in der "Systemebene getaktet" abläuft, führt diesen Bewegungs- bzw. Positionierbefehl aus. Nach Ausführung des Befehls wird in die "Anwenderebene sequentiell" zurückgesprungen und das durch "Suspend" unterbrochene Anwenderprogramm wird durch ein "Resume" an der gleichen Stelle fortgesetzt. Die "Systemebene getaktet" enthält neben den schon erwähnten Lagereglern auch den Interpolationsteil der Steuerung.

Auf die niederpriorste Ebene setzt die "Anwenderebene Events" auf. Hier sind solche Tasks untergebracht, die auf externe oder interne Ereignisse reagieren. Solche Ereignisse können beispielsweise Alarme sein.

In einer folgenden "Anwenderebene synchrongetaktet" laufen synchron getaktete Anwender-Tasks ab, z.B. Reglerfunktionalitäten. Diese Tasks sind synchronisiert zu getakteten Systemfunktionen wie zum Beispiel Interpolator, Lageregler oder zyklische Buskommunikation.
In der Darstellung gemäß FIG 3 wird in Form eines Strukturbildes gezeigt, dass die Steuerung eines technischen Prozesses P1 über das Runtime-System RTS einer industriellen Steuerung erfolgt. Die Verbindung zwischen dem Runtime-System RTS der Steuerung und dem technischen Prozess P1 geschieht bidirektional über die Ein-/Ausgänge EA. Die Programmierung der Steuerung und damit das Festlegen des Verhaltens des Runtime-Systems RTS geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System erstellten Programme werden über den Informationspfad I in das Runtime-System RTS der Steuerung übertragen. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, einer Einrichtung für die Aufnahme computerlesbarer Medien (z.B. Disketten, CDs) sowie Anschlusseinheiten für einen Datenaustausch mit anderen Systemen (z.B. weiteren Computersystemen, Steuerungen für technische Prozesse) oder Medien (z.B. Internet). Eine Steuerung besteht üblicherweise aus Eingabe- und Ausgabeeinheiten, sowie aus Prozessor und Programmspeicher. Es ist auch vorstellbar, dass die Steuerung eines technischen Prozesses P1 über mehrere Runtime-Systeme RTS von industriellen Steuerungen erfolgt.

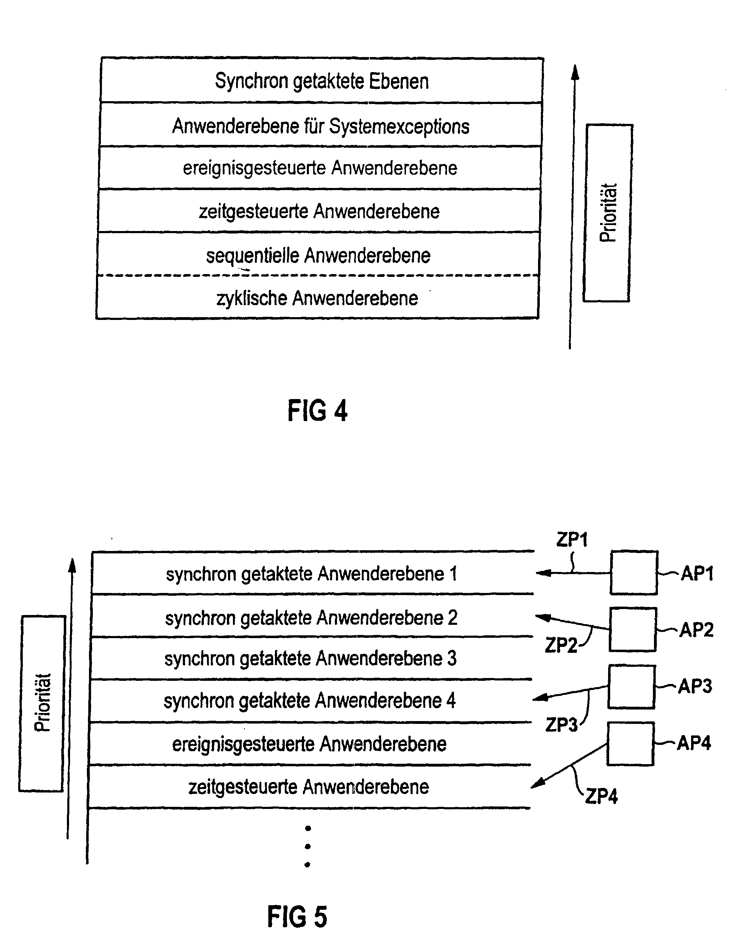

Die Darstellung gemäß FIG 4 zeigt das Ablaufebenenmodell der industriellen Steuerung. Die Priorisierung der Ebenen wird durch einen Pfeil in Richtung zur höchsten Priorität angedeutet. Die niederpriorsten Ebenen sind die "zyklische Anwenderebene" und die "sequentielle Anwenderebene". Diese beiden Ebenen laufen mit der gleichen Priorität. Deshalb sind diese Ebenen in der Darstellung gemäß FIG 4 durch eine gestrichelte Linie getrennt. Die "zyklische Anwenderebene" beinhaltet die "Background Task", die zykluszeitüberwacht ist. In der "sequentiellen Anwenderebene" werden die "Motion Tasks" durchlaufen. "Motion Tasks" sind nicht zykluszeitüberwacht und dienen im Wesentlichen zur Beschreibung sequentieller Abläufe. "Motion Tasks" werden quasiparallel abgearbeitet. Generell enthalten alle Anwenderebenen eine oder mehrere Tasks. Die Tasks nehmen die Anwenderprogramme auf. Die Tasks der "zyklische Anwenderebene" und der "sequentiellen Anwenderebene" werden in einem gemeinsamen Round-Robin-Zyklus abgearbeitet.

Die nächstfolgende Ebene ist die "zeitgesteuerte Anwenderebene". Die Tasks dieser Ebene werden zeitgesteuert aktiviert. Die Zeitsteuerung ist einer Granularität von Millisekunden einstellbar. Auf die "zeitgesteuerte Anwenderebene" folgt die "ereignisgesteuerte Anwenderebene". In dieser Ebene werden nach Erkennen eines User Interrupts so genannte "User Interrupt Tasks" aktiviert. User Interrupt Ereignisse können als logische Verknüpfung von Prozessereignissen und/oder internen Zuständen formuliert werden.

Die nächsthöhere Ebene ist die "Anwenderebene für System Exceptions". In dieser "Anwenderebene für System Exceptions" werden System Interrupts überwacht, bei deren Eintreffen so genannte "Exceptions", d.h. Ausnahmefallbehandlungen, generiert werden. In der "Anwenderebene für System Exceptions" gibt es z.B. folgende Tasks, die bei Auftreten eines entsprechenden System Interrupts aktiviert werden:
a) "Time Fault Task", die beim Ansprechen von Zeitüberwachungen aktiviert wird,
b) "Peripheral Fault Task", die z.B. bei Prozess- und Diagnosealarmen aktiviert wird, aber auch bei Stationsausfall oder Stationswiederkehr,
c) "System Fault Task", die bei allgemeinen Systemfehlern aktiviert wird,
d) "Program Fault Task", die bei Programmierfehlern (z.B. Division durch Null) aktiviert wird,
e) "Time Fault Background Task", die beim Ansprechen der Zykluszeitüberwachung der Background Task aktiviert wird und
f) "Technological Fault Task", die bei Technologiefehlern aktiviert wird.

Als nächstes folgt die Ebenengruppe "synchron getaktete Ebenen". Diese Ebenengruppe besitzt die höchste Priorität im Ablaufebenenmodell. Die einzelnen Ebenen dieser Ebenengruppe können untereinander weitere Priorisierungen aufweisen. Die Ebenengruppe "synchron getaktete Ebenen" besteht aus mindestens einer Systemebene und mindestens einer Anwenderebene. Die Systemebenen beinhalten die Systemfunktionen wie z.B. Lageregler oder Interpolator. In die Anwenderebenen dieser Ebenengruppe können von einem Anwender flexibel Anwenderprogramme (AP1 - AP4; FIG 5) zugeladen werden.

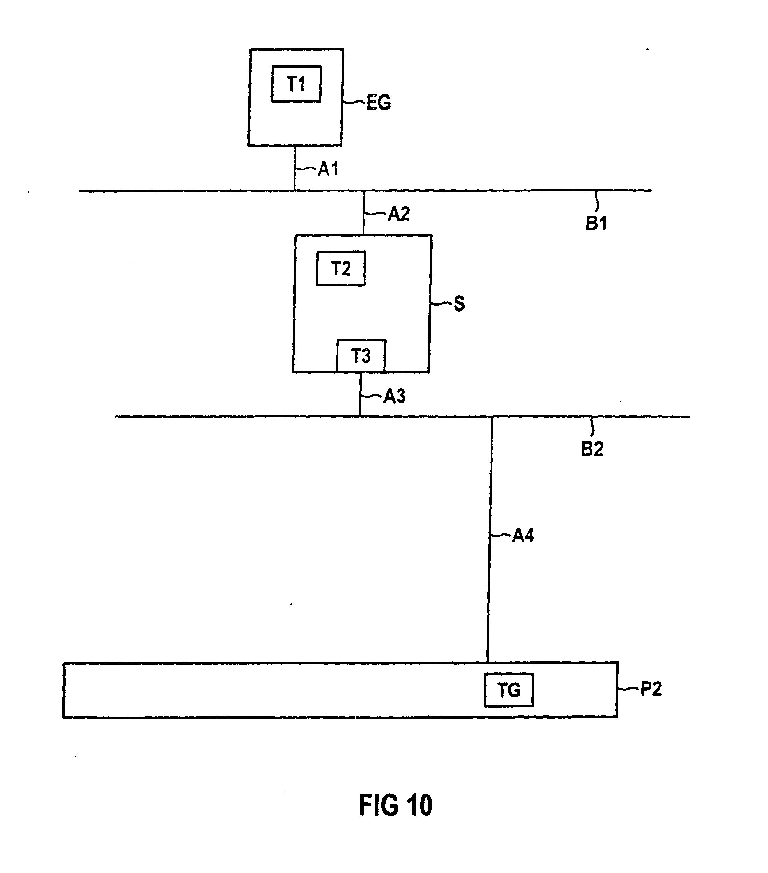

Für die Taktung der "synchron getakteten Ebenen" gibt es eine Reihe unterschiedlicher Taktgenerierungsmöglichkeiten. Der Grundtakt kann z.B. aus einem internen Timer (T1; FIG 10) kommen oder aus einem internen Takt (T3; FIG 10) eines Kommunikationsmediums (z.B. Profibus) oder aber der Takt kann auch aus einem Prozessereignis des technologischen Prozesses abgeleitet werden. Ein solches Prozessereignis kann z.B. die Taktrate (TG; FIG 10) eines Vorgangs an einer Produktionsmaschine oder Verpackungsmaschine sein. Anwenderebenen der Ebenengruppe "synchron getaktete Ebenen" können dabei basierend auf dem Grundtakt getaktet werden, sie können aber auch synchron zu einer der Systemebenen der Ebenengruppe "synchron getaktete Ebenen" laufen. Die Anwendertasks dieser zu einer Systemebene synchronen Anwenderebene haben somit eine synchrone, d.h. deterministische Beziehung zu einer vom Anwender flexibel festlegbaren Systemebene. Das hat den Vorteil, dass deterministische Reaktionen auf Systemtasks (Systemtasks laufen in den Systemebenen), die der Anwender in seinen Anwendertasks programmiert hat, die in den Anwenderebenen der Ebenengruppe "synchron getaktete Ebenen" laufen, vom System garantiert werden. Das heißt z.B., dass das System garantiert, dass diese "synchrone Anwenderebene" entsprechend beispielhaft vor dem Interpolator aktiviert wird oder aber auch vor einer beliebigen anderen Systemfunktion.

Die "zeitgesteuerte Anwenderebene", die "ereignisgesteuerte Anwenderebene", die "sequentielle Anwenderebene", die "zyklische Anwenderebene" sowie die "Anwenderebene für System Exceptions" sind optional.

Die Task der "zyklischen Anwenderebene" (Background Task) ist zykluszeitüberwacht. Die "Motion Tasks" dagegen sind nicht zykluszeitüberwacht und dienen im wesentlichen zur Beschreibung sequentieller Abläufe. Das heißt, das vorliegende Ablaufebenenmodell unterstützt einen Anwender sowohl bei der Programmierung von sequentiellen Abläufen als auch bei der Ereignisprogrammierung. Es können somit synchrone Ereignisse als auch asynchrone Ereignisse durch die Programmierung erfasst werden. In die Anwenderebenen sind die vom Anwender erstellten Anwenderprogramme (AP1 - AP4; FIG 5) zuladbar. Die Anwenderprogramme AP1 bis AP4 werden üblicherweise mit Hilfe einer Programmierumgebung des Engineering-Systems (ES; FIG 3) erstellt.

Die Darstellung gemäß FIG 5 zeigt ein Ausführungsbeispiel für das Zuladen von Anwenderprogramm in die Anwenderebenen. FIG 5 zeigt exemplarisch eine Ausprägung von Anwenderebenen des Ablaufebenenmodells. Durch die drei Punkte am unteren Rand der Zeichnung ist dargestellt, dass auch noch weitere Anwenderebenen, aber auch Systemebenen vorhanden sein können. Die Priorisierung der Ebenen wird wie im Vorangegangenen durch einen Pfeil in Richtung zur höchsten Priorität angedeutet. Den Anwenderebenen werden die Anwenderprogramme AP1 bis AP4, am rechten Bildrand durch kleine Rechtecke angedeutet, zugeordnet. Die Zuordnung wird dargestellt durch Zuordnungspfeile ZP1 bis ZP4. In den Anwenderebenen befinden sich Tasks, die die zugeladenen Anwenderprogramme AP1 bis AP4 aufnehmen. Diese Tasks werden dann nach einer gewissen Strategie (z.B. sequentiell) durchlaufen bzw. abgearbeitet. Sie können weiterhin die Eigenschaft besitzen, dass sie laufzeitüberwacht sind.

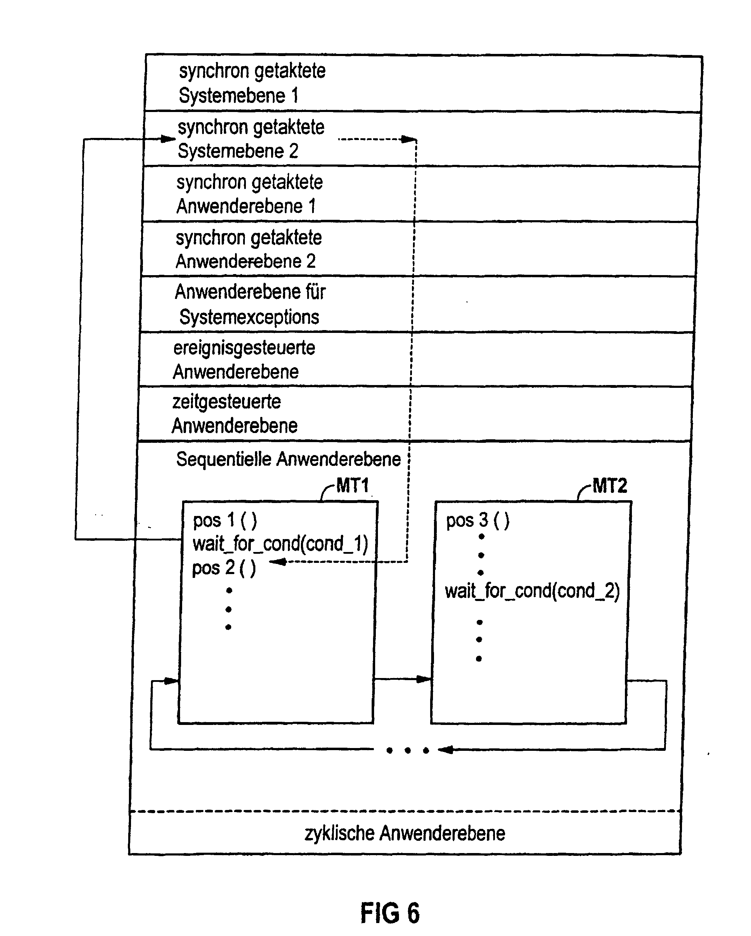

Die Darstellung gemäß FIG 6 zeigt ein Ausführungsbeispiel für den Gebrauch und den Mechanismus des Wait_for_Condition-Befehls, im Ablaufebenenmodell der erfindungsgemäßen industriellen Steuerung. Der Wait_for_Condition-Befehl (in FIG 6 dargestellt als wait_for_cond()) wird in dieser Darstellung exemplarisch in der "sequentiellen Anwenderebene" verwendet. Der Wait_for_Condition-Befehl wird in den vom Anwender erstellten "Motion Tasks" MT1 und MT2 verwendet, die Bestandteil der "sequentiellen Anwenderebene" sind. Die "Motion Tasks" MT1 und MT2 hängen in einem Round-Robin-Zyklus, dargestellt durch den Pfeil von MT1 nach MT2 und durch den abgewinkelten Pfeil von MT2 zu MT1. Die drei Punkte innerhalb dieses Pfeiles deuten an, dass noch weitere "Motion Tasks" im Round-Robin-Zyklus hängen können. Die "Motion Task" MT1 enthält den Wait_for_Condition-Befehl "wait_for_cond(cond_1)", die "Motion Task" MT2 den Wait_for-Condition-Befehl "wait_for_cond(cond_2)". Jeweils drei Punkte, die innerhalb von MT1 bzw. MT2 verwendet werden, deuten an, dass neben den beiden Wait_for_Condition-Befehlen und den drei Positionierbefehlen pos1() bis pos3() noch weitere Befehle in den "Motion Tasks" enthalten sein können.

Insgesamt besteht das in FIG 6 exemplarisch dargestellte Ablaufebenenmodell eines Runtime-Systems für eine industrielle Steuerung aus folgenden Ebenen (aufgezählt von niedrigster bis höchster Priorität): "zyklische Anwenderebene", "sequentielle Anwenderebene" (die Tasks dieser beiden Ebenen haben die gleiche Priorität, dargestellt durch die gestrichelte Linie zwischen diesen Ebenen), "zeitgesteuerte Anwenderebene", "ereignisgesteuerte Anwenderebene", "Anwenderebene für Systemexceptions", "synchron getaktete Anwenderebene 2", "synchron getaktete Anwenderebene 1", "synchron getaktete Systemebene 2" und als höchstpriore Ebene eine "synchron getaktete Systemebene 1".

Die Arbeitsweise des Wait_for_Condition-Befehls wird beispielhaft an "wait_for_cond(cond_1)" aus der "Motion Task" MT1 gezeigt. Ist die "Motion Task" MT1 im Round-Robin-Zyklus an der Reihe, werden die Befehle der "Motion Task" MT1 solange bedient, bis die Zeitscheibe abgelaufen ist, oder eine Unterbrechung kommt. Trifft dies zu, wird die "Motion Task" MT2 als nächste Task im Zyklus bedient, usw. Wird in der "Motion Task" MT1 der wait_for_cond(cond_1)-Befehl abgearbeitet, wird die Bedingung cond_1 überprüft. Ist cond_1 = true, also erfüllt, dann wird sofort der nächstfolgende Befehl pos2() ausgeführt und eventuell weitere in MT1 vorhandene Befehle sukzessive abgearbeitet, bis die Kontrolle an die nächste Task abgegeben wird.

Ist die Bedingung cond_1 = false, also nicht erfüllt, wird sofort die "Motion Task" MT1 unterbrochen und im Round-Robin-Zyklus wird MT2 bedient. Die Bedingung cond_1 wird aber in die "synchron getaktete Systemebene 2" eingehängt (angedeutet durch den durchgehenden abgewinkelten Pfeil vom wait_for_cond(cond_1)-Befehl zu der "synchron getakteten Systemebene 2") und im Takt dieser Systemebene auf ihr Erfülltsein überprüft. Ist die Bedingung cond_1 erfüllt, wird im Round-Robin-Zyklus die aktuelle Task verdrängt, d.h. ihr wird die Zeitscheibe entzogen und die Motion Task MT1 wird sofort unmittelbar nach dem wait_for_cond(cond_1) mit dem Positionierbefehl pos2() fortgesetzt. Durch den gestrichelten Pfeil wird der Rücksprung aus der "synchron getakteten Systemebene 2" zum Positionierbefehl pos2(), d.h. zur "sequentiellen Anwenderebene" angedeutet.

Dadurch, dass bei Nichterfülltsein der Bedingung des Wait_for_Condition-Befehls die Überprüfung der Bedingung in einer hochprioren "synchron getakteten Systemebene" stattfindet, und bei Erfülltsein der Bedingung sofort die unterbrochene "Motion Task" fortgesetzt wird, ist es einem Anwender möglich, bei der Programmierung von Bewegungssequenzen extrem zeitkritische Applikationen mit einfachen Sprachmitteln zu spezifizieren. Die Performance und Deterministik wird noch dadurch erhöht, dass beim Überprüfen der Bedingungen in den jeweiligen hochprioren "synchron getakteten Systemebenen" nur aktuell anstehende Bedingungen eingehängt und berücksichtigt werden.

Der hier beschriebene Mechanismus erfordert auch keinen expliziten Event-Handler. Der große Vorteil aus Anwendersicht liegt somit darin, dass der Anwender jetzt in einem sequentiellen Ablaufprogramm auf einer relativ niedrigen Prioritätsebene einer "Motion Task" in seinem Programmfluss hochpriore Ereignisse mit Hilfe von Programmkonstrukten formulieren kann und nicht in ein anderes Programm wechseln muss, das er dann über andere Mechanismen (z.B. per Hand oder interruptgesteuert) auf synchrone Anwendertask abbilden muss, sondern er hat die Möglichkeit, in einem geschlossenen Anwenderprogramm diesen Zyklus "Warten auf hochpriores Ereignis" und "hochpriore Reaktion" auf dieses Ereignis in einem Programm geschlossen zu formulieren.

Die Bedingungen, die in einem Wait_for_Condition-Befehl abgefragt werden, können vom Anwender sehr flexibel und elegant formuliert werden. So kann der Anwender zur Formulierung dieser Bedingungen Programmvariablen aus einem Anwenderprogramm verwenden oder interne Größen der Steuerung oder er kann auch Prozesssignale referenzieren. Diese Größen können dann logisch, arithmetisch oder mit beliebigen Funktionen inhaltlich verknüpft werden, um daraus eine Bedingung zu formulieren. Neben dem hochprioren Abfragen, ob die Bedingung erfüllt ist, kann man sich auch vorstellen, dass bei Erfülltsein der Bedingung auch noch dazugehöriger Programmcode, d.h. eine dahinterliegende Reaktion, die anwenderprogrammierbar ist, hochprior ausgeführt wird. Und dass erst nach der Ausführung dieses Programmcodes der Rücksprung in die niederpriore Ebene erfolgt.

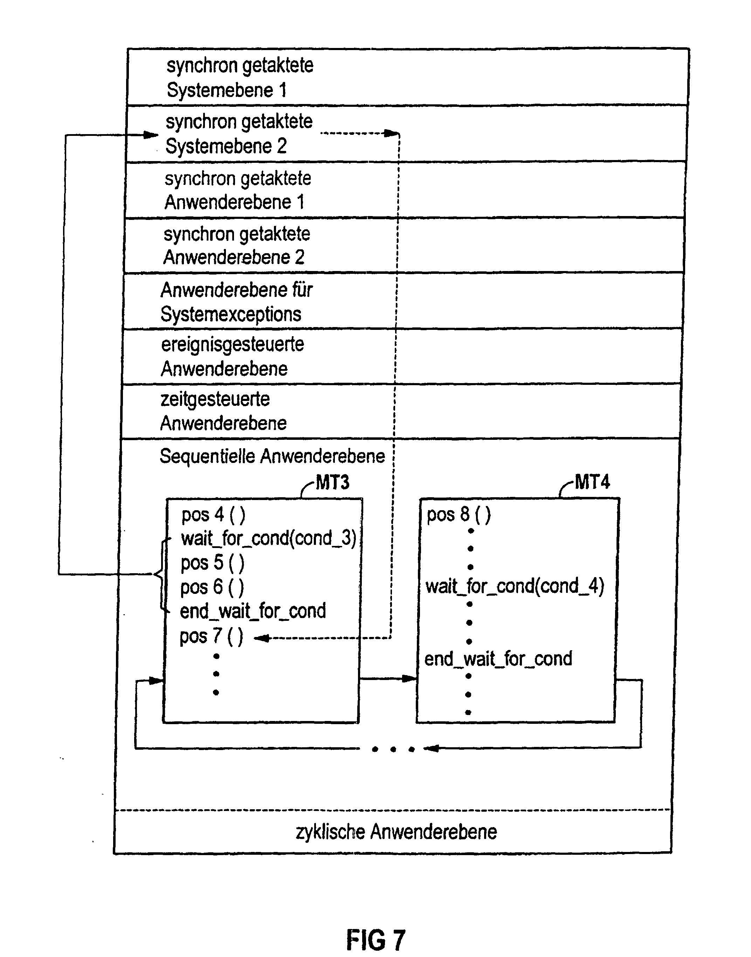

Die Darstellung gemäß FIG 7 zeigt ein erweitertes Ausführungsbeispiel für den Gebrauch und den Mechanismus des Wait_for_Condition-Befehls, im Ablaufebenenmodell der erfindungsgemäßen industriellen Steuerung. Der Wait_for_Condition-Befehl (in FIG 7 ebenfalls dargestellt als wait_for_cond()) wird in dieser Darstellung exemplarisch in der "sequentiellen Anwenderebene" verwendet. Der Wait_for_Condition-Befehl wird in den vom Anwender erstellten "Motion Tasks" MT3 und MT4 verwendet, die Bestandteil der "sequentiellen Anwenderebene" sind. Die "Motion Tasks" MT3 und MT4 hängen in einem Round-Robin-Zyklus, dargestellt durch den Pfeil von MT3 nach MT4 und durch den abgewinkelten Pfeil von MT4 zu MT3. Die drei Punkte innerhalb dieses Pfeiles deuten an, dass noch weitere "Motion Tasks" im Round-Robin-Zyklus hängen können. Die "Motion Task" MT3 enthält den Wait_for_Condition-Befehl "wait_for_cond(cond_3)", die "Motion Task" MT4 den Wait_for-Condition-Befehl "wait_for_cond(cond_4)". Jeweils drei Punkte, die innerhalb von MT3 bzw. MT4 verwendet werden, deuten an, dass neben den beiden Wait_for_Condition-Befehlen und den Positionierbefehlen pos4( ) bis pos8( ) noch weitere Befehle in den "Motion Tasks" enthalten sein können. Durch die programmiersprachlichen Konstrukte "wait_for_cond( )" und "end_wait_for_cond" wird eine Programmsequenz in den "Motion Tasks" geklammert. In der "Motion Task" MT3 sind die Befehle pos5() und pos6() auf diese Weise geklammert. Auch in der "Motion Task" MT4 wird die Verwendung von "wait_for_cond()" und "end_wait_for_cond" angedeutet. Durch jeweils 3 Punkte ist in der "Motion Task" MT4 skizziert, dass vor, innerhalb und nach dem "wait_for_cond() - end_wait_for_cond"-Konstrukt weitere Anweisungen vorhanden sein können.

Das in FIG 7 exemplarisch dargestellte Ablaufebenenmodell eines Runtime-Systems für eine industrielle Steuerung besteht wie in FIG 6 aus folgenden Ebenen (aufgezählt von niedrigster bis höchster Priorität): "zyklische Hintergrundebene", "sequentielle Anwenderebene" (die Tasks dieser beiden Ebenen haben die gleiche Priorität, dargestellt durch die gestrichelte Linie zwischen diesen Ebenen), "ereignisgesteuerte Anwenderebene", "zeitgesteuerte Anwenderebene", "Anwenderebene für Systemexceptions", "synchron getaktete Anwenderebene 2", "synchron getaktete Anwenderebene 1", "synchron getaktete Systemebene 2" und als höchstpriore Ebene eine "synchron getaktete Systemebene 1".

In FIG 7 wird die Arbeitsweise des Wait_for_Condition-Befehls mit einer dazugehörigen Programmsequenz gezeigt beispielhaft an "wait_for_cond(cond_3)" aus der "Motion Task" MT3 gezeigt. Das Überprüfen der Bedingung cond_3 und das Abarbeiten der dazugehörigen Programmsequenz (geklammert zwischen "wait_for_cond(cond_3)" und "end_wait_for_cond") erfolgen dabei auf einer höherprioren Ebene des Ablaufebenenmodells. Die zu "wait_for_cond(cond_3)" dazugehörigen Programmsequenz wird durch die Abfolge der Befehle pos5() und pos6() gebildet.

Ist die "Motion Task" MT3 im Round-Robin-Zyklus an der Reihe, werden die Befehle der "Motion Task" MT3 solange bedient, bis die Zeitscheibe abgelaufen ist, oder eine Unterbrechung kommt. Trifft dies zu, wird die "Motion Task" MT4 als nächste Task im Zyklus bedient, usw. Wird in der "Motion Task" MT3 der "wait_for_cond(cond_3))"-Befehl abgearbeitet, so wird die Bedingung cond_3 überprüft. Ist cond_3 = true, also erfüllt, dann wird der normale programmablauf fortgesetzt, d.h. als nächstes wird der Befehl pos5() ausgeführt und eventuell weitere in MT3 vorhandene Befehle sukzessive abgearbeitet, bis die Kontrolle an die nächste Motion Task abgegeben wird.

Ist die Bedingung cond_3 = false, also nicht erfüllt, wird sofort die "Motion Task" MT3 unterbrochen und im Round-Robin-Zyklus wird MT4 bedient. Die Bedingung cond_3 und die Befehle pos5() und pos6() (als dazugehörige Programmsequenz) werden in der Priorität der "synchron getakteten Systemebene 2" bearbeitet (angedeutet durch den durchgehenden abgewinkelten Pfeil, ausgehend von der Klammer, die die Zusammengehörigkeit von wait_for_cond(cond_3), end_wait_for_cond und dazugehöriger Programmsequenz ausdrückt, hin zu der "synchron getakteten Systemebene 2"). Im Takt dieser Systemebene wird cond_3 auf ihr Erfülltsein überprüft. Ist die Bedingung cond_3 erfüllt, wird mit der Priorität der "synchron getakteten Systemebene 2" die dazugehörige Programmsequenz (hier: die Abfolge der Befehle pos5() und pos6() abgearbeitet. Durch den gestrichelten Pfeil wird der Rücksprung aus der "synchron getakteten Systemebene 2" zum Positionierbefehl pos7(), d.h. zur "sequentiellen Anwenderebene" angedeutet.

Dadurch, dass bei Nichterfülltsein der Bedingung des Wait_for_Condition-Befehls die Überprüfung der Bedingung in einer hochprioren "synchron getakteten Systemebene" stattfindet, und bei Erfülltsein der Bedingung sofort eine dazugehörige, vom Anwender erstellbare Programmsequenz auf dieser hochprioren Systemebene ausgeführt wird, können sogar extrem zeitkritische Applikationen mit einfachen Sprachmitteln spezifiziert und durchgeführt werden.

Ein möglicher Anwendungsfall ist die Druckmarkensynchronisation. Dabei geht es darum, eine Druckmarke auf einem Material hochprior zu erkennen. Beim Erkennen dieser Druckmarke wird typischerweise ein Istwert erfasst ("Latchen" z.B. eines Lage- oder Geberistwertes). Ausgehend von diesem erfassten Istwert wird ein Korrekturwert berechnet, der dem System als überlagerte Bewegung aufgeprägt wird. Der Vorgang Istwert-Erkennung, Korrekturwert-Berechnung und Durchführung der überlagerten Bewegung muß in einer deterministischen Zeitdauer erfolgen. Deswegen muß dieser Vorgang hochprior stattfinden.

Ein weiterer Anwendungsfall ist der "schnelle Bewegungsstart". Hier geht es darum, z.B. Flankenwechsel sehr schnell zu erkennen und daran sofort anschließend einen Bewegungsstart (z.B. Positionierbewegung) zu beginnen. Die Deterministik Erkennen eines Ereignisses und Auslösen von Folgeaktionen ist entscheidend für die Produktivität einer Maschine. Bei Produktionsmaschinen müssen solche zyklischen Vorgänge in einer deterministischen Zeit, z.B. <100 ms oder <50 ms erfolgen. Beim Abarbeiten der Tasks auf einer normalen Hintergrundebene kann diese Deterministik nicht garantiert werden. Der beschriebene Mechanismus ist besonders für einen Einsatz bei Maschinen geeignet, die periodische Maschinenzyklen aufweisen.

Die Performance wird noch dadurch erhöht, dass beim Überprüfen der Bedingungen in den jeweiligen hochprioren "synchron getakteten Systemebenen" nur aktuell anstehende Bedingungen eingehängt und berücksichtigt werden.

Der hier beschriebene Mechanismus erfordert, wie schon in FIG 6 erwähnt, keinen expliziten Event-Handler. Der große Vorteil aus Anwendersicht liegt somit darin, dass der Anwender jetzt in einem sequentiellen Ablaufprogramm auf einer relativ niedrigen Prioritätsebene einer "Motion Task" in seinem Programmfluss hochpriore Ereignisse mit Hilfe von Programmkonstrukten formulieren kann und nicht in ein anderes Programm wechseln muss, das er dann über andere Mechanismen (z.B. per Hand oder interruptgesteuert) auf synchrone Anwendertask abbilden muss, sondern er hat die Möglichkeit, in einem geschlossenen Anwenderprogramm diesen Zyklus "Warten auf hochpriores Ereignis" und "hochpriore Reaktion" auf dieses Ereignis in einem Programm geschlossen zu formulieren.

Der Wait_for_Condition-Befehl kann vom Anwender sehr flexibel und einfach eingesetzt werden, da er als normales programmiersprachliches Konstrukt zur Verfügung steht. Auch die Formulierung der Bedingungen ist für einen Anwender flexibel und einfach. So kann der Anwender zur Formulierung dieser Bedingungen Programmvariablen aus einem Anwenderprogramm verwenden oder interne Größen der Steuerung oder er kann auch Prozesssignale referenzieren. Diese Größen können dann logisch, arithmetisch oder mit beliebigen Funktionen inhaltlich verknüpft werden, um daraus eine Bedingung zu formulieren.

Durch das Wait_for_Condition-Konstrukt hat ein Anwender die Möglichkeit in normalen Anwenderprogrammen für Bewegungssequenzen, ein Anwenderprogramm temporär auf eine höhere Prioritätsebene zu legen, um deterministische Vorgänge garantieren zu können.

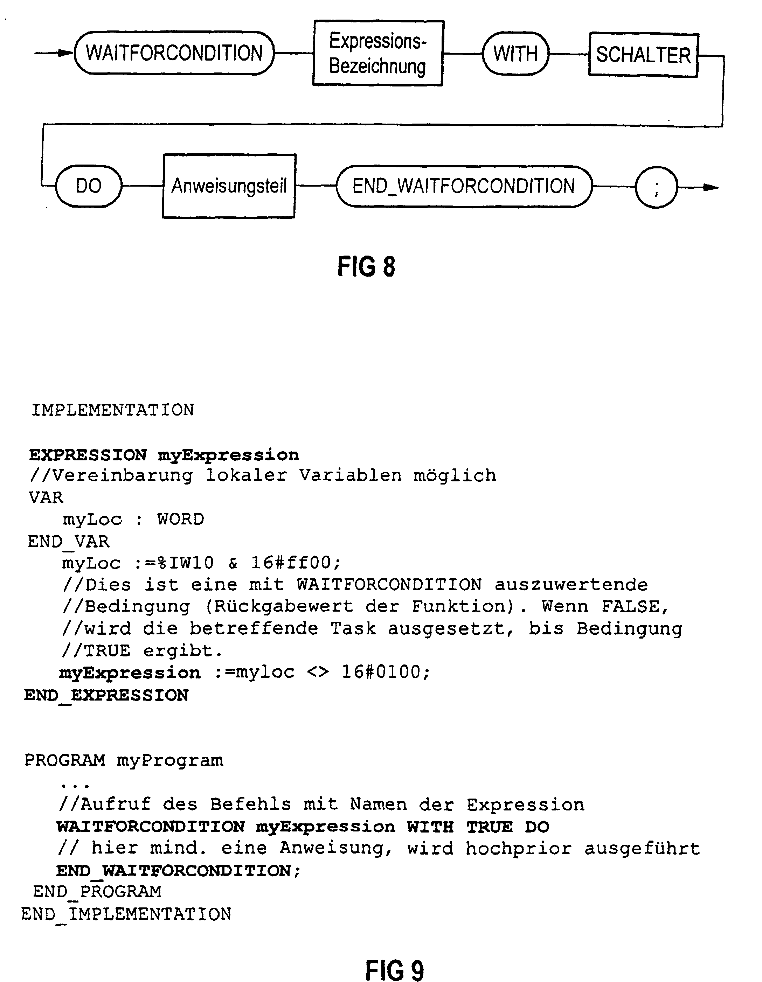

Darstellung gemäß FIG 8 zeigt das programmiersprachliche Konstrukt des wait_for_condition-Mechanismus als Syntaxdiagramm. Die terminalen Elemente sind dabei mit abgerundeten Ecken dargestellt: "WAITFORCONDITION", "WITH", "DO", "END_WAITFORCONDITION" und ";". Als Rechtecke sind die nichtterminalen Elemente dargestellt: "Expressions-Bezeichnung, "SCHALTER" und "ANWEISUNGSTEIL". Die Elemente "WITH" und "SCHALTER" sind optional.

Darstellung gemäß FIG 9 zeigt die Verwendung des Wait_for_Condition-Konstruktes in einem Programmablauf. Im oberen Teil von FIG 9 ist die Formulierung der Bedingung "my-Expression" dargestellt, im unteren Teil ist gargestellt, wie diese Bedingung in einem Wait_for_Condition-Konstrukt verwendet wird.

Darstellung gemäß FIG 10 zeigt in einer Schemadarstellung Möglichkeiten, wie der Grundtakt für die industrielle Steuerung gewonnen wird. FIG 10 zeigt exemplarisch eine Kommunikationstopologie, in die die Steuerung S integriert ist. Die Steuerung S ist durch ein Rechteck dargestellt. Durch eine Anschlussleitung A2 ist die Steuerung S mit dem Bus B1 verbunden, an dem über eine Anschlussleitung A1 das externe Gerät EG hängt. Über den Bus B2 erfolgt die Verbindung zum technischen Prozess P2. Der technische Prozess P2 ist am unteren Bildrand durch ein Rechteck dargestellt. Über die Anschlussleitung A3 ist die Steuerung S mit dem Bus B2 verbunden, der wiederum über die Anschlussleitung A4 die Verbindung zum technischen Prozess P2 herstellt.

Die Generierung für den Grundtakt der Steuerung S kann aus unterschiedlichen Taktquellen erfolgen. So z.B. aus einer internen Taktquelle, dargestellt durch den internen Timer T2 der Steuerung S oder auch durch eine externe Taktquelle wie z.B. den Timer T1, der zum externen Gerät EG gehört. Als externe Taktquelle kann aber auch der Grundtakt eines Kommunikationsmediums dienen. Wenn der Bus B2 z.B. durch einen äquidistanten Profibus realisiert wird, dann kann der Takt für die Steuerung aus dem Grundtakt dieses Busses gewonnen werden. In FIG 10 ist dies dargestellt dadurch, dass der Timer T3 direkt an der Anschlussleitung A3 positioniert ist, und diese Anschlussleitung A3 stellt die Verbindung zum Bus B2 her. Die Steuerung hängt somit als Slave am Bus und kann direkt den Bustakt verwenden. Weiterhin kann als externe Taktquelle ein Taktgeber TG dienen, der im technischen Prozess P2 integriert ist. Ein Taktgeber TG in einem technischen Prozess kann z.B. der Arbeitstakt einer Produktionsmaschine oder Verpackungsmaschine sein. In der Darstellung gemäß FIG 10 sind als Kommunikationsmedien beispielhaft Busverbindungen dargestellt. Es können aber als Kommunikationsmedien aber auch Ring-, Stern- oder andere Verbindungsarten gewählt werden, auch wireless-Verbindungen. Aus diesen Verbindungssystemen kann dann der oben genannte Grundtakt abgeleitet werden.

## Patentansprüche

1. Verfahren zum Betrieb einer industriellen, mit einem Runtime-System (RTS) ausgestatteten Steuerung (S), insbesondere für Produktionsmaschinen,
**dadurch gekennzeichnet,**
**dass** Mechanismen bereitgestellt sind, die es einem Anwender ermöglichen im Programmfluß auf eine beliebige Bedingung zu warten, wobei bei Erfülltsein der Bedingung der Programmfluß unmittelbar fortgesetzt wird, bei Nichterfülltsein der Bedingung der Programmfluß solange angehalten wird, bis das Erfülltsein der Bedingung festgestellt wird, wobei beim Warten auf das Erfülltsein der Bedingung die Priorität der Bedingungsüberprüfung im Vergleich zur aktuellen Taskpriorität erhöht wird.

2. Verfahren zum Betrieb einer industriellen Steuerung nach Anspruch 1,
**dadurch gekennzeichnet,**
**dass** nach dem Erfülltsein der Bedingung die folgende Programmsequenz bis zu einem expliziten Ende hochprior bearbeitet wird, wobei nach dem expliziten Ende der Programmsequenz die alte Taskpriorität wieder aufgenommen wird.

3. Verfahren zum Betrieb einer industriellen Steuerung nach Anspruch 1 oder 2,
**dadurch gekennzeichnet,**
**dass** für die Formulierung der Bedingungen Prozeßsignale und/oder interne Signale der Steuerung und/oder Variablen aus Anwenderprogrammen (AP1 - AP4) verwendet werden.

4. Verfahren zum Betrieb einer industriellen Steuerung nach einem der vorstehenden Ansprüche,
**dadurch gekennzeichnet,**
**dass** die Bedingungen logische und/oder arithmetische und/oder beliebige funktionelle Verknüpfungen enthalten.

5. Verfahren zum Betrieb einer industriellen Steuerung nach einem der vorstehenden Ansprüche,
**dadurch gekennzeichnet,**
**dass** ein Anwenderprogramm (AP1 - AP4) für den Betrieb der Steuerung mehr als einen solchen Mechanismus enthält.

6. Verfahren zum Betrieb einer industriellen Steuerung nach einem der vorstehenden Ansprüche,
**dadurch gekennzeichnet,**
**dass** es mehrere Anwenderprogramme (AP1 - AP4) beim Betrieb der Steuerung geben kann, die diese Mechanismen enthalten.

7. Verfahren zum Betrieb einer industriellen Steuerung nach einem der vorstehenden Ansprüche,
**dadurch gekennzeichnet,**
**dass** der jeweilige Mechanismus einem Anwender in einem Anwenderprogramm (AP1 - AP4) als übliches programmiersprachliches Konstrukt zur Verfügung steht.

8. Industrielle Steuerung zur Durchführung des Verfahrens nach einem der vorstehenden Ansprüche,
**dadurch gekennzeichnet,**
**dass** das Runtime-System (RTS) der Steuerung (S) ein Ablaufebenenmodell enthält, das mehrere Ablaufebenen unterschiedlichen Typs mit unterschiedlicher Priorität aufweist, wobei folgende Ablaufebenen vorgesehen sind:
a) eine Ebenengruppe mit synchron getakteten Ebenen, bestehend aus mindestens einer Systemebene und mindestens einer Anwenderebene, wobei die Ebenen dieser Ebenengruppe untereinander eine Priorisierung aufweisen können,
b) einer Anwenderebene für Systemexceptions,
c) einer zeitgesteuerten Anwenderebene
d) einer ereignisgesteuerten Anwenderebene
e) einer sequentiellen Anwenderebene
f) einer zyklischen Anwenderebene,
wobei Anwenderebenen der Ebenengruppe a) optional synchron zu einer der Systemebenen der Ebenengruppe a) laufen können.

9. Industrielle Steuerung nach Anspruch 8,
**dadurch gekennzeichnet,**
**dass** der Grundtakt des Ablaufebenenmodells aus einem internen Timer (T2) oder aus einem internen Takt (T3) eines Kommunikationsmediums oder aus einem externen Gerät (EG) oder von einer Größe (TG), die zum technologischen Prozeß (P1, P2) gehört abgeleitet wird.

10. Industrielle Steuerung nach Anspruch 8 oder Anspruch 9,
**dadurch gekennzeichnet,**
**dass** die zeitgesteuerte Anwenderebene, die ereignisgesteuerte Anwenderebene, die sequentielle Ablaufebene, die zyklische Hintergrundebene und die Anwenderebene für Systemexceptions optional sind.

11. Industrielle Steuerung nach Anspruch 8, 9 oder 10,
**dadurch gekennzeichnet,**
**dass** die synchronen Ebenen zum Grundtakt übersetzt und/oder untersetzt und/oder im Verhältnis 1:1 getaktet sind.

12. Industrielle Steuerung nach Anspruch 8, 9, 10 oder 11,
**dadurch gekennzeichnet,**
**dass** weitere priorisierende Schichtungen innerhalb der Ablaufebenen vorgesehen sind.

13. Industrielle Steuerung nach Anspruch 8, 9, 10, 11 oder 12,
**dadurch gekennzeichnet,**
**dass** optional Anwendertasks beim Systemhochlauf und/oder beim Systemrunterfahren durchlaufbar sind.

14. Industrielle Steuerung nach Anspruch 8, 9, 10, 11, 12 oder 13,
**dadurch gekennzeichnet,**
**dass** in die Anwenderebenen Anwenderprogramme (AP1 - AP4) ladbar sind, die je nach Typ der Anwenderebene zyklusorientiert oder sequentiell programmiert sind.

## Claims

1. Method for operating an industrial control system (S), equipped with a runtime system (RTS), particularly for production machines,
**characterised in that**
the mechanisms are provided that enable a user to wait in the program flow for any condition, with the program flow being immediately continued if the condition is fulfilled, with the program flow being stopped in the event of non-fulfilment of the condition until fulfilment of the condition is determined, with the priority of the condition check when waiting for fulfilment of the condition being increased compared with the current task priority.

2. Method for operating an industrial control system according to Claim 1,
**characterised in that**
after fulfilment of the condition, the succeeding program sequence is processed at a high priority up to an explicit end, with the old task priority being again resumed after the explicit end of the program sequence.

3. Method for operating an industrial control system according to Claim 1 or 2, **characterised in that**
process signals and/or internal signals from the control system and/or variables from user programs (AP1 - AP4) are used for the formulation of the conditions.

4. Method for operating an industrial control system according to one of the preceding claims, **characterised in that**
the conditions contain logic and/or arithmetical and/or any functional links.

5. Method for operating an industrial control system according to one of the preceding claims, **characterised in that**
a user program (AP1 - AP4) for the operation of the control system contains more than one such mechanism.

6. Method for operating an industrial control system according to one of the preceding claims, **characterised in that**
there can be several user programs (AP1 - AP4) when operating the control system that contain these mechanisms.

7. Method for operating an industrial control system according to one of the preceding claims, **characterised in that**
the particular mechanism is available to the user in a user program (AP1-AP4) as a conventional program language construct.

8. Industrial control system for implementing the method according to one of the preceding claims, **characterised in that**
the runtime system (RTS) of the control system (S) contains a sequence level model that has several sequence levels of different types with different priorities, with the following sequence levels being provided.
a) A level group with synchronously-timed levels, consisting of at least one system level and at least one user level, with the levels of this level group being able to have different prioritisations.
b) A user level for system exceptions.
c) A time-controlled user level.
d) An event-controlled user level.
e) A sequential user level.
f) A cyclical user level.
whereby user levels of user group a) can run in synchronisation with one of the system levels of user group a) as an option.

9. Industrial control system according to Claim 8,
**characterised in that**
the basic timing of the sequence level model is derived from an internal timer (T2) or from an internal clock (T3) of a communication medium or from an external unit (EG) or from a variable (TG) belonging to the technical process (P1, P2).

10. Industrial control system according to Claim 8 or Claim 9,
**characterised in that**
the time-controlled user level, the event-controlled user level, the sequential sequence level, the cyclical background level and the user level for system exceptions are optional.

11. Industrial control system according to Claim 8, 9 or 10,
**characterised in that**
the timing of the synchronous levels is scaled up and/or scaled down and/or in a ratio of 1:1 to the basic timing.

12. Industrial control system according to Claim 8, 9, 10 or 11,
**characterised in that**
further prioritising layering is provided within the sequence levels.

13. Industrial control system according to Claim 8, 9, 10, 11 or 12,
**characterised in that**
optional user tasks can be performed during the system start-up and/or system rundown.

14. Industrial control system according to Claims 8, 9, 10, 11 12 or 13,
**characterised in that**
user programs (AP1 - AP4), that depending on the type of user level are programmed as cycle oriented or sequential, can be loaded into the user levels.

## Revendications

1. Procédé pour faire fonctionner une commande industrielle (S) équipée d'un système run-time (RTS), notamment pour des machines de production,
**caractérisé par le fait que**
on met à disposition des mécanismes qui permettent à un utilisateur d'attendre dans le flux du programme une condition quelconque, le flux du programme se poursuivant immédiatement si la condition est satisfaite et le flux du programme étant arrêté si la condition n'est pas satisfaite jusqu'à ce que la condition soit satisfaite, la priorité du test de la condition lorsqu'on attend que la condition soit satisfaite étant accrue en comparaison de la priorité actuelle de la tâche.

2. Procédé pour faire fonctionner une commande industrielle selon la revendication 1,
**caractérisé par le fait que**, une fois la condition satisfaite, on traite la séquence de programme suivante jusqu'à une fin explicite avec une plus grande priorité, l'ancienne priorité de la tâche étant reprise après la fin explicite de la séquence de programme.

3. Procédé pour faire fonctionner une commande industrielle selon la revendication 1 ou 2,
**caractérisé par le fait que**, pour la formulation des conditions, on utilise des signaux de processus et/ou des signaux internes de la commande et/ou des variables de programmes d'utilisateur (AP1 à AP4).

4. Procédé pour faire fonctionner une commande industrielle selon l'une des revendications précédentes,
**caractérisé par le fait que** les conditions contiennent des combinaisons logiques et/ou arithmétiques et/ou fonctionnelles quelconques.

5. Procédé pour faire fonctionner une commande industrielle selon l'une des revendications précédentes,
**caractérisé par le fait qu'**un programme d'utilisateur (AP1 à AP4) pour faire fonctionner la commande contient plus d'un mécanisme de ce type.

6. Procédé pour faire fonctionner une commande industrielle selon l'une des revendications précédentes,
**caractérisé par le fait qu'**il peut exister pour faire fonctionner la commande plusieurs programmes d'utilisateur (AP1 à AP4) qui contiennent ces mécanismes.

7. Procédé pour faire fonctionner une commande industrielle selon l'une des revendications précédentes,
**caractérisé par le fait que** le mécanisme respectif est à la disposition d'un utilisateur dans un programme d'utilisateur (AP1 à AP4) comme une construction habituelle du langage de programmation.

8. Commande industrielle pour la mise en oeuvre du procédé selon l'une des revendications précédentes,
**caractérisée par le fait que** le système run-time (RTS) de la commande (S) contient un modèle de niveaux d'exécution qui comporte plusieurs niveaux d'exécution de différents types avec différentes priorités, les niveaux d'exécution suivants étant prévus :
a) un groupe de niveaux avec des niveaux synchrones, constitué d'au moins un niveau de système et d'au moins un niveau d'utilisateur, les niveaux de ce groupe de niveaux pouvant présenter des priorités les uns par rapport aux autres,
b) un niveau d'utilisateur pour des exceptions de système,
c) un niveau d'utilisateur commandé par le temps,
d) un niveau d'utilisateur commandé par les événements,
e) un niveau d'utilisateur séquentiel,
f) un niveau d'utilisateur cyclique,
des niveaux d'utilisateur du groupe de niveaux a) pouvant tourner optionnellement en synchronisation avec l'un des niveaux de système du groupe de niveaux a).

9. Commande industrielle selon la revendication 8,
**caractérisée par le fait que** l'horloge fondamentale du modèle de niveaux d'exécution est déduite d'un temporisateur interne (T2) ou d'une horloge interne (T3) d'un moyen de communication ou d'un appareil externe (EG) ou d'une grandeur (TG) qui appartient au processus technologique (P1, P2).

10. Commande industrielle selon la revendication 8 ou la revendication 9,
**caractérisée par le fait que** le niveau d'utilisateur commandé par le temps, le niveau d'utilisateur commandé par les événements, le niveau d'exécution séquentiel, le niveau d'arrière-plan cyclique et le niveau d'utilisateur pour des exceptions de système sont optionnels.

11. Commande industrielle selon la revendication 8, 9 ou 10,
**caractérisée par le fait que** les niveaux synchrones ont par rapport à l'horloge fondamentale une horloge surmultipliée et/ou sous-multipliée et/ou dans un rapport 1:1.

12. Commande industrielle selon la revendication 8, 9, 10 ou 11,
**caractérisée par le fait que** d'autres structures en couches avec priorités sont prévues à l'intérieur des niveaux d'exécution.

13. Commande industrielle selon la revendication 8, 9, 10, 11 ou 12,
**caractérisée par le fait que**, en option, des tâches d'utilisateur peuvent être exécutées lors du démarrage du système et/ou lors de l'arrêt du système.

14. Commande industrielle selon la revendication 8, 9, 10, 11, 12 ou 13,
**caractérisée par le fait que** dans les niveaux d'utilisateur peuvent être chargés des programmes d'utilisateur (AP1 à AP4) qui sont programmés soit en cycles soit séquentiellement selon le type du niveau d'utilisateur.
